(19) Europäisches Patentamt
European Patent Office
Office européen des brevets

(11) Veröffentlichungsnummer: **0 308 789 B1**

(12) **EUROPÄISCHE PATENTSCHRIFT**

(45) Veröffentlichungstag der Patentschrift: **27.01.93**

(51) Int. Cl.5: **B01D 53/36**

(21) Anmeldenummer: **88114987.6**

(22) Anmeldetag: **14.09.88**

(54) **Verfahren zur katalytischen Umsetzung von Kohlenwasserstoff, Halogenkohlenwasserstoff und Kohlenmonoxid enthaltenden Abgasen.**

(30) Priorität: **21.09.87 DE 3731688**

(43) Veröffentlichungstag der Anmeldung:
**29.03.89 Patentblatt 89/13**

(45) Bekanntmachung des Hinweises auf die Patenterteilung:
**27.01.93 Patentblatt 93/04**

(84) Benannte Vertragsstaaten:
**BE DE ES FR GB IT NL SE**

(56) Entgegenhaltungen:
**DE-A- 2 127 616**
**DE-A- 2 422 988**
**DE-A- 3 308 335**
**DE-A- 3 502 866**
**DE-A- 3 507 558**

**VDI-BERICHTE 525 "Katalytische u. thermische Verfahren der Abgasreinigung", Tagung Mannheim, 07.,08.03.1985,VDI-VERLAG, Düsseldorf,1985, Seiten 75-89,347-364**

(73) Patentinhaber: **Degussa Aktiengesellschaft**
**Weissfrauenstrasse 9**
**W-6000 Frankturt am Main 1(DE)**

(72) Erfinder: **Deller, Klaus, Dr.**
**Friedhofstrasse 47**
**W-6452 Hainburg(DE)**
Erfinder: **Mösinger, Hans**
**Würzburger Strasse 8**
**W-6458 Rodenbach(DE)**
Erfinder: **Müller, Herbert, Dr.**
**Freigerichtstrasse 10**
**W-8757 Karlstein a. Main(DE)**
Erfinder: **Riedl, Josef, Dr.**
**Kantstrasse 53**
**W-8269 Burgkirchen(DE)**
Erfinder: **Kühn, Wenzel, Dr.**
**Kampenwandstrasse 15**
**W-8269 Burgkirchen(DE)**
Erfinder: **Spielmannleitner, Rudolf**
**Pranckstrasse 31**
**W-8262 Altötting(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur katalytischen Umsetzung von Kohlenwasserstoff, Halogenkohlenwasserstoff und Kohlenmonoxid enthaltenden Abgasen, insbesondere aus der Synthese von Vinylchlorid, bei dem die Abgase bei Temperaturen von 300 - 800, vorzugsweise 350 - 730° C, zunächst durch eine einen Katalysator zur oxidativen Spaltung enthaltende erste Zone und dann durch eine einen Platingruppenmetallkatalysator zur oxidativen Nachverbrennung enthaltende zweite Zone geleitet werden.

Neben der zunehmenden Luftverschmutzung durch $SO_2$ und $NO_x$ ist auch die Emission von Kohlenwasserstoffen und insbesondere Halogenkohlenwasserstoffen zu einem ernsthaften Problem geworden. So fallen z. B. in Herstellungsprozessen für Vinylchlorid Abgase an, die teilweise höchst schädliche Substanzen enthalten. Eine Einhaltung der TA-Luft, Novelle 1986, Emissionswerte, läßt sich am besten durch eine zusätzliche Abgasreinigung erfüllen.

Von der Vielfalt der Maßnahmen zur Minderung von Emissionen luftverunreinigender Stoffe kommen hierfür in erster Linie thermische oder katalytische Reinigungsverfahren zur Anwendung, da mit diesen besonders hohe Reinigungsgrade erzielt werden.

Bei der thermischen Nachverbrennung werden die zu beseitigenden Schadstoffe unter Energiezufuhr bei Temperaturen bis 15000° C in einer Brennkammer oxidiert (VDI-Berichte 525 Katalytische und thermische Verfahren der Abgasreinigung, Tagung 7./8.3.1985, VDI-Verlag Düsseldorf, 1985, S. 347).

Die Verweilzeit in der Brennkammer beträgt dabei mind. 1 s (VDI l.c. S. 347). Nach wirtschaftlichen Gesichtspunkten ist die thermische Reinigung nur bei hohen Schadstoffkonzentrationen von Vorteil. Ein wesentlicher Nachteil liegt in den Kosten für die Erzeugung und Aufrechterhaltung der Umsetzungstemperaturen sowie darin, daß die bei dem Nachverbrennungsprozeß freiwerdende Wärmeenergie nicht immer wirtschaftlich verwertet werden kann.

Die katalytische Nachverbrennung arbeitet meist mit Hilfe von Edelmetallkatalysatoren bei ca. 300 - 700° C und bei Verweilzeiten bis 0,3 s. Sie ist bei niedrigen Schadstoffkonzentrationen vorzuziehen und zeichnet sich im Vergleich zum thermischen Verfahren durch deutlich niedrigere Betriebskosten aus (VDI l.c. S. 75). Allerdings bestehen Einschränkungen bei der Anwendung des katalytischen Verfahrens aufgrund einer möglichen Aktivitatsminderung des Katalysators infolge zu hoher thermischer Belastung oder chemischer Desaktivierung durch im Abgas vorhandene Katalysatorgifte (VDI l.c. S. 75), wie z. B. anorganische Halogen-, Phosphor-Verbindungen sowie Stäube. Neben diesen Begleitstoffen wirken auch die Mehrzahl organischer Chlorverbindungen als Katalysatorgifte.

Die DE-OS 24 22 988 beschreibt ein Verfahren zur Zersetzung von Halogenkohlenwasserstoffen, bei dem die Abgase bei Temperaturen im Bereich von 200 - 500° C zunächst über einen Chromoxidkatalysator und anschließend über einen mit Platin beladenen Böhmit-Katalysator geleitet werden. Der Chromoxidkatalysator besteht aus einem Träger aus Aluiminiumoxid, Siliziumoxid, Siliziumoxid-Aluminiumoxid, Mullit, Cordierit oder ähnlichen Materialien, auf dem Chromverbindungen durch Imprägnieren aufgebracht und nachfolgend thermisch in Chromoxid überführt werden. Nachteilig bei diesem Verfahren ist die Gefahr, daß insbesondere bei Temperaturen über 500° C Chrom aus dem Chromoxidkatalysator in den dagegen empfindlichen Platingruppenmetallkatalysator verschleppt werden und damit zu einer vorzeitigen Vergiftung des nachgeschalteten Katalysators führen kann.

Bei der Anwendung der kostengünstigeren katalytischen Abgasreinigung für die Herstellungsprozesse für Vinylchlorid bestand daher die zu lösende Aufgabe darin, durch verfahrenstechnische Maßnahmen die thermische Belastung des Katalysators niedrig zu halten (Temperaturen kleiner als 800° C) und einer Vergiftung so weit wie möglich entgegenzuwirken.

Gegenstand der Erfindung ist ein Verfahren zur katalytischen Umsetzung von Kohlenwasserstoff, Halogenkohlenwasserstoff und Kohlenmonoxid enthaltenden Abgasen, insbesondere aus der Synthese von Vinylchlorid, wobei die Abgase bei 300 - 800, vorzugsweise 350 - 730° C, zunächst durch eine einen Katalysator zur oxidativen Spaltung enthaltende erste Zone und dann durch eine einen Platingruppenmetallkatalysator zur oxidativen Nachverbrennung enthaltende zweite Zone geleitet werden.

Das Verfahren ist dadurch gekennzeichnet, daß die katalytisch aktive Substanz des Katalysators der ersten Zone Aluminiumoxid, Siliziumdioxid, Aluminiumsilikat und/oder ein Zeolith, mit einem Gehalt von 0 - 20 Gew.% einer oder mehrerer oxidischer Verbindungen aus der Gruppe der Elemente Ba, Mg und Mn und die katalytisch aktive Substanz des Katalysators der zweiten Zone Platin und/oder Palladium oder Platin und Rhodium ist.

Die Eintrittstemperatur des Abgases muß dabei oberhalb der Anspringtemperatur des Katalysators tiegen. Um ausreichende Umsetzung zu erzielen, sollte die Abgastemperatur unmittelbar vor dem Eintritt in die erste Zone nicht unter 300° C liegen und in beiden Zonen 800° C nicht überschreiten, damit eine thermische Schädigung des Katalysators vermieden wird. In den Katalysatorzonen finden oxidative Spaltung

von längerkettigen, aromatisch-aliphatischen Kohlenwasserstoffen (1) in kleinere Moleküle, oxidative Nachverbrennung von ungesättigten bzw. gesättigten (Halogen-)Kohlenwasserstoffen (2) und Oxidation von CO zu $CO_2$ (3) statt:

$$(1)\quad R\text{-}(CH_2)_4\text{-}R' \xrightarrow{1/2\ O_2} R\text{-}CH{=}CH_2 + R'\text{-}CH{=}CH_2 + H_2O$$

$$(2)\quad H_2C{=}CH_2 + 3\ O_2 \longrightarrow 2\ CO_2 + 2\ H_2O$$

$$H_2C{=}CHCl + 2{,}5\ O_2 \longrightarrow 2\ CO_2 + H_2O + HCl$$

$$(3)\quad CO + 1/2\ O_2 \longrightarrow CO_2$$

Grundsätzlich sind hierfür alle in der Literatur angegebenen, für die katalytische Abgasreinigung gebräuchlichen Katalysatoren verwendbar. Die Erfindung arbeitet mit bestimmten Kombinationen von an sich aus der Literatur bekannten Katalysatoren.

Grundsätzlich können in der ersten Zone alle für oxidative Spaltungen von organischen Verbindungen bekannten Katalysatorsysteme eingesetzt werden. Im vorliegenden speziellen Fall der katalytischen Umsetzung von Kohlenwasserstoff, Halogenkohlenwasserstoff und Kohlenmonoxid enthaltenden Abgase, insbesondere aus der Synthese von Vinylchlorid, hat es sich als sehr wichtig herausgestellt, einen Katalysator zu verwenden, der nur eine Teilumsetzung bewirkt. Im einzelnen handelt es sich bei den hier unter Luftüberschuß ablaufenden Reaktionen um oxidative Zersetzungen, Dehalogenierungen und Dehydrohalogenierungen, wobei Verunreinigungen wie aliphatische und aromatische Kohlenwasserstoffe und Chlorkohlenwasserstoffe wie Ethylchlorid, Vinylchlorid und 1,2-Dichlorethan etc. weitgehend, Substanzen wie Methylchlorid, Methan aber nur teilweise und Kohlenmonoxid praktisch nicht umgesetzt werden.

Durch den Vorumsatz in der ersten Zone wird bereits dort ein beträchtlicher Teil der Reaktionswärme freigesetzt, so daß Temperaturspitzen in der nachfolgenden Zone des sehr aktiven zweiten Katalysators mit einer damit verbundenen Sinterung von Trägermaterial und katalytisch aktiver Phase weitgehend vermieden werden; dies wirkt sich vorteilhaft auf die Standzeit dieses Katalysators aus.

Der relativ unempfindliche Katalysator der ersten Zone fungiert darüber hinaus als Filter für Schwermetalle aus Apparaten und Rohrleitungen und für sonstige Katalysatorgifte. Aufgrund seiner Oberflächenbeschaffenheit besitzt er die Eigenschaft, die bei der Reaktion in situ entstehenden Cl-Atome auf der Oberfläche abzufangen und so den nachgeschalteten, empfindlichen Katalysator der zweiten Zone weitgehend vor Vergiftungen zu schützen. Besonders bevorzugte, katalytisch aktive Substanzen des Katalysators der ersten Zone sind Aluminiumoxid, Siliciumdioxid, Aluminiumsilikat und/oder ein Zeolith, gegebenenfalls mit einem Gehalt von 0,1 - 20 Gew.% an oxidischen Verbindungen eines oder mehrerer der Elemente Ba, Mg und Mn.

Der Katalysator der zweiten Zone dient zur möglichst vollständigen Umsetzung der thermisch stabilen Kohlenwasserstoffe und Halogenkohlenwasserstoffe, sowie zur Oxidation von Kohlenmonoxid. Er muß deshalb eine gute Oxidationswirkung erbringen. Grundsätzlich können hier Unedelmetallkatalysatoren oder Vollkontakte, wie auch Edelmetallkatalysatoren verwendet werden. Besonders gute Ergebnisse werden erhalten, wenn die katalytisch aktive Substanz des Katalysators der zweiten Zone Platin und/oder Palladium oder Platin und Rhodium ist. Dabei können Platin und Palladium im Gewichtsverhältnis 1 : 5 - 5 : 1 und Platin und Rhodium im Gewichtsverhältnis 5 : 1 - 20 : 1 vorliegen.

Für die Katalysatoren der ersten und/oder zweiten Zone können die unterschiedlichsten Ausführungsformen zur Anwendung kommen. Es hat sich als zweckmäßig erwiesen, daß der Katalysator der ersten und/oder zweiten Zone als ungeformtes oder geformtes Schüttgut aus dem Katalysatormaterial oder in Form von mit der katalytisch aktiven Komponente versehenen Trägerkörpern oder als mit einem katalysefördernden Trägermaterial für die katalytisch aktive Komponente überzogener Monolith oder als mit der katalytisch aktiven Komponente versehener Monolith oder als Monolith aus katalysefördernden Material oder als Monolith aus dem Katalysatormaterial selbst, ausgebildet ist.

Die ungeformten oder geformten Schüttgutkörper können z. B. als Granulat, Pellets, Kugeln, Tabletten,

Extrudat, Strangpreßlinge, Hohlstränge, Sattelkörper, Gitterkörper oder in beliebig geformten Ausführungen vorliegen, die durch Tauch-, Tränk-, oder Sprühimprägnierung, Sputtern oder nach allgemein üblichen Methoden mit der aktiven Substanz versehen sind. Bei Verwendung von porösem Trägermaterial können die katalytisch aktiven Komponenten im gesamten Formkörper gleichmäßig verteilt oder bevorzugt an der äußeren Oberfläche angereichert sein. Ein derartiger, sogenannter Schalenkatalysator kann auch zur strukturellen Verstärkung einen inerten Kern aus Vollmaterial wie z. B. $\alpha$-$Al_2O_3$, oder Cordierit, z. B. in Kugelform oder als Wabenkörper, haben.

Durch die gezielt aufeinander abgestimmte Wirkungsweise beider Katalysatorschichten werden auch mit dem empfindlicheren Edelmetallkatalysator der zweiten Zone Standzeiten erreicht, wie sie in herkömmlichen Einbett-Verfahren mit solchen Katalysatoren bisher nicht möglich waren.

Eine besonders günstige Ausführungsform des erfindungsgemäßen Verfahrens sieht vor, daß die beiden Katalysatoren als Doppelbett oder im Abstand voneinander angeordnet sind. Die Doppelbettausführung ist besonders raumsparend und deshalb mit den geringsten Apparatekosten verbunden. Dagegen gewährleistet die Anordnung der Zonen im Abstand voneinander eine durch Verwirbelung des Abgases bedingte gleichmäßigere Temperaturverteilung vor dem Eintritt in die zweite Zone. Darüber hinaus kann mit dieser Anordnung vor allem bei hohem Heizwert des Abgases eine gewisse Abkühlung des Gases (z. B. durch Einspeisen von Luft) herbeigeführt werden, um den Katalysator der zweiten Zone vor Überhitzung zu schützen. Der Abstand zwischen beiden Zonen ist beliebig wählbar und nach oben nur durch die Apparatedimensionen begrenzt.

Um eine möglichst große Anströmfläche im zur Verfügung stehenden Reaktorinnenraum zu gewährleisten, wird das Abgas gemäß einer vorzugsweisen Ausführungsform der Erfindung, durch eine ringförmige Anordnung der beiden Katalysatorzonen geführt, wobei die ringförmige Anordnung zylindrisch ist. Die Strömungsrichtung kann dabei so gewählt werden, daß das Abgas durch die zylindrische Anordnung von außen nach innen oder umgekehrt geführt wird. Die Katalysatorzonen können als Schüttbett und/oder Monolithanordnung ausgebildet sein. Die Monolithen können aus Keramik bestehen, statt dessen können aber auch übliche Metallwaben zum Einsatz kommen. Wenn Monolith- bzw. Schüttbettkatalysatoren oder eine Kombination dieser verwendet werden, so können die Zonen in Form eines Vielecks angeordnet sein. Dabei kommen Dreieck bis Oktagon als Grundfläche des Vielecks in Frage, wobei der Ringraum beibehalten werden kann.

Die bei der katalytischen Umsetzung entstehende Wärme kann dazu genutzt werden, um das zu reinigende Abgas in einem vom gereinigten Abgas beheizten Wärmeaustauscher vorzuerhitzen.

Da chemische Reaktionen von Stoffgemischen unterschiedliche Aktivierungsenergie besitzen, muß, um die Anspringtemperatur des weniger aktiven, mit dem Abgas zuerst in Berührung kommenden Katalysators (der ersten Schicht) zu erreichen, das zu reinigende Abgas bei der Inbetriebnahme des Reaktors meist vorübergehend durch Fremdheizung auf die Anspringtemperatur des Katalysators, in dieser spezifischen Anwendung auf ca. 400° C, erhitzt werden. Als mögliche Arten der Fremdheizung kommen z. B. Gasbrenner, IR-Strahler, Zündung mittels Elektrode (über Erzeugung und Ausbreitung eines Wärmenestes) oder sonstige Energiequellen in Frage. Bei ausreichend hohem Heizwert des umzusetzenden Abgases kann der Reaktor nach Erreichen der Anspringtemperatur bei entsprechender Abgasführung auch ohne Fremdheizung betrieben werden.

Die Druckverhältnisse bei der katalytischen Abgasverbrennung sind unkritisch. Man kann die Umsetzung bei Normaldruck bis 10 bar überdruck durchführen.

Ein weiterer Gegenstand der Erfindung ist eine einfache und zweckmäßige Apparatur zur Durchführung des erfindungsgemäßen Verfahrens. Diese, in der einzigen Zeichnungsfigur gezeigte Apparatur ist gekennzeichnet durch ein zylindrisches Reaktorgehäuse 1 mit einer von einem ringförmigen Boden 2 begrenzten kreisförmigen Öffnung 3, eine auf dem ringförmigen Boden gasdicht aufsitzende, oben durch eine Platte 4 geschlossene Anordnung dreier in Abständen entsprechend der Dicke zweier aufzunehmender ringförmiger Schüttgutkatalysatorschichten 5, 6 ineinander gestellter und auf dem ringförmigen Boden aufsitzender Zylinder 7, 8, 9 mit perforierten Mänteln, von denen der innere erste Mantel 7 mit der Kante 10 der Bodenöffnung 3 fluchtet, der zweite Mantel 8 die beiden Katalysatorschichten trennt und der äußere Mantel 9 in einem einen Ringraum 11 zur Reaktorgehäusewand ausbildenden gleichmäßigen oder sich nach oben vergrößernden Abstand steht, eine unter dem Boden des Reaktorgehäuses sich anschließende und mit der Sekundärseite eines Wärmeaustauschers 12 in Verbindung stehende Misch- und Vorheizzone 13, in welche seitlich eine Leitung 14 für die Zufuhr eines gasförmigen Heizmediums mündet, eine mit dem Kopfraum 15 des Reaktorgehäuses verbundene Abgasleitung 16, welche zu einer Abzweigung 17 führt, von der eine Zweigleitung 18 mit dem Eintrittsstutzen des Wärmeaustauschers für das Heizmedium und eine andere über ein Schließorgan 19 mit dem Abgasaustritt 20 der Apparatur verbunden ist, der Austrittsstutzen des Wärmeaustauschers für das Heizmedium über eine Leitung 21 direkt mit dem Abgasaustritt 20 verbunden

ist und die Primärseite des Wärmeaustauschers an die Zufuhrleitung 22 für das umzusetzende Abgas angeschlossen ist.

Wenn man die Vorheizung des umzusetzenden Abgases auf Anspringtemperatur ausschließlich im Wärmeaustauscher durchführen will, so kann die Apparatur dahingehend variiert werden, daß die Leitung für die Zufuhr des gasförmigen Heizmediums nicht in der Zone 13, sondern im Kopfraum 15 des Reaktorgehäuses mündet.

Die vorstehend beschriebene Apparatur kann so variiert werden, daß die beiden Katalysatorschichten aus aufeinandergesetzten Monolithkatalysatoren und/oder Schüttgut-Katalysatoren bestehen und die zylindrische Halterungsanordnung von Anspruch 15 unter Ersatz der Zylinder 7, 8, 9 durch eine mehreckige Anordnung an sich bekannter Halterungseinrichtungen für Monolithen oder Schüttbetten ersetzt ist.

Der Betrieb der in der Zeichnung dargestellten beispielsweisen Apparaturausführung gestaltet sich folgendermaßen:

Das umzusetzende Abgas tritt bei 22 in den Wärmeaustauscher 12 ein, gelangt dann in die Misch- und Vorheizzone 13, wo es mittels eines über Leitung 14 zugeführten gasförmigen Heizmediums auf die erforderliche Anspringtemperatur des Katalysators vorerhitzt wird. Das Heizmedium wird in einer Brenneranordnung durch Verbrennung eines Methan/Luft-Gemisches erzeugt. Bei Bedarf kann nach dem Brenner Sekundärluft zur Nachverbrennung zugegeben werden.

Das vorerhitzte Abgas tritt dann nacheinander durch die Katalysatorschichten 6 und 5, wobei 6 ein Katalysator zur oxidativen Spaltung und 5 ein Edelmetall-Oxidationskatalysator ist. Das umgesetzte Abgas verläßt über den Ringraum 11, den Kopfraum 15 und Leitung 16 den Reaktor und kann dann durch entsprechende Stellung von Klappe 19 ganz oder teilweise über Leitung 18 als Heizmedium dem Wärmeaustauscher zugeführt werden. Der Ringaum 11 erweitert sich bei der gezeigten Apparaturausführung konisch nach oben und schafft damit verbesserte Strömungsbedingungen für das entlang der Katalysatoranordnung unter Volumenzunahme in den Ringraum 11 übertretende gereinigte Abgas.

Bei hoher Exothermie im Reaktor kann die Abgasrückführung praktisch unterbleiben. Das gereinigte, im Wärmeaustauscher 12 abgekühlte Abgas gelangt schließlich über Leitung 21 direkt zum Abgasaustritt 20 der Apparatur. Dieser Abgasstrom kann einer weiteren Wärmerückgewinnung zugeführt werden.

Die Erfindung wird nachfolgend anhand von Ausführungsbeispielen weiter erläutert.

## Beispiel 1

1.1 Katalysator für Zone 1

Als Katalysator für Zone 1 wurde ein handelsüblicher $SiO_2$-Träger (Fa. Südchemie, Träger "KA 3", Kugeln 4 - 5 mm, Schüttgewicht 0,6 g/l, spezifische Oberfläche ca. 170 $m^2/g$) verwendet.

1.2 Katalysator für Zone 2

1000 g $\gamma$-Aluminiumoxidkugeln (Fa. Rhone-Poulenc), "SCS 250", Durchmesser 4 - 6 mm, Schüttdichte 0,71 g/l, spezifische Oberfläche 253 $m^2/g$) werden in einer Imprägniertrommel mit 300 ml dest. $H_2O$ (entspricht 2/3 der Wasseraufnahmefähigkeit des Trägermaterials) vorbelegt und anschließend mit 150 ml einer Pt-Rh-haltigen Lösung imprägniert. Die Edelmetall-Lösung enthält 0,5 g 16%ige $RhCl_3$-Lösung (entspricht 0,08 g Rh) und 6,4 g 25%ige $H_2PtCl_6$-Lösung (entspricht 1,6 g Pt) und ist mit 10%iger $Na_2CO_3$-Lösung so vorneutralisiert, daß sich in der mit dest. $H_2O$ auf 150 ml verdünnten Imprägnierlösung pH-Wert 6 einstellt.

Nachdem die Edelmetall-Lösung vom porösen Trägermaterial vollständig aufgenommen ist, wird der Katalysator bei 120° C bis zur Gewichtskonstanz getrocknet und anschließend 4 h bei 400° C unter Formiergas (95 Vol. % $N_2$, 5 Vol. % $H_2$) reduziert. Der fertige Katalysator enthält 0,16 Gew.% Pt und 0,008 Gew.% Rh.

1.3 Umsetzung einer Testgasmischung aus CO, Ethylen und Ethylchlorid in einem Laborreaktor

Ein beheizbarer Rohrreaktor aus temperaturbeständigem Stahl wird mit jeweils 38 $cm^3$ (entspricht 10 cm Schichtdicke) der beiden Katalysatoren (s. Pkt. 1.1 und 1.2) gefüllt, so daß eine Doppelbett-Anordnung vorliegt. Die Katalysatorkombination wird bei unterschiedlichen Gaseintrittstemperaturen in die erste Katalysatorzone und konstanter Belastung (GHSV = 15 000 $h^{-1}$) mit einer Testgasmischung aus

| | |
|---|---|
| 1 | Vol.% CO |
| 0,7 | Vol.% Ethylen |
| 0,5 | Vol.% Ethylchlorid |
| Rest | Luft |

beaufschlagt und der erreichte Umsatzgrad hinter der zweiten Katalysatorzone gemessen. (Ergebnisse s. Tab. 1). Je nach Katalysatorkombination der im folgenden genannten Beispiele treten dabei innerhalb der Reaktionszonen Temperaturspitzen auf, die bis zu 300° C über der Gaseintrittstemperatur in Zone 1 liegen können.

Beispiel 2

2.1 Katalysator für Zone 1
Als Katalysator für Zone 1 dienten handelsübliche γ-Aluminiumoxid-Kugeln (Fa. Rhone-Poulenc, "SCS 250", Durchmesser 2,4 - 4 mm, Schüttdichte 0,71 g/cm$^3$, spezifische Oberfläche 253 m$^2$/g, Gesamtporenvolumen 52,2 cm$^3$/100 g).
2.2 Katalysator für Zone 2
Ein Bohrkern (Durchmesser 20 mm, Länge 120 mm) aus einem wabenförmigen Träger aus Cordierit (Fa.Corning, 400 Zellen/inch$^2$, ungefähre Zusammensetzung: 14,0 Gew.% MgO 35,4 Gew.% $Al_2O_3$, 49,6 Gew.% $SiO_2$) wird mit einer 30 %igen wäßrigen Dispersion von γ-Aluminiumoxid mehrfach gespült und jeweils zwischen den einzelnen Spülvorgängen 2 h bei 200° C im Heißluftstrom getrocknet. Anschließend erfolgt eine Temperung bei 700° C. Der $Al_2O_3$-beschichtete Träger (Wasseraufnahme 14 %) wird dann in eine Lösung folgender Zusammensetzung getaucht
71,4 g $H_2PtCl_6$ (25 % Pt $\hat{=}$ 17,85 g Pt)
22,3 g $RhCl_3$ (16 % Rh $\hat{=}$ 3,57 g Rh)
in 1000 ml Lösung,
die mit 10 %iger NaOH auf pH-Wert 6 eingestellt ist.

Nach der Trocknung ist der Träger mit 0,3 Gew.% Edelmetall im Gewichtsverhältnis Pt : Rh = 5 : 1 belegt. Schließlich erfolgt die Reduktion der abgeschiedenen Edelmetallverbindungen im Wasserstoffstrom bei einer Temperatur von 500° C für die Dauer von 1 h. Die spezifische Oberfläche des so gefertigten Katalysators betrug 24 m$^2$ /g.
2.3 Katalysatortestung analog Beispiel 1.3
(Ergebnisse s. Tab. 1)

Beispiel 3

3.1 Katalysator für Zone 1
Der in Beispiel 2.2 genannte Cordierit-Träger wird mit einer 30%igen wäßrigen Dispersion von γ-Aluminiumoxid und Magnesiumoxid (Gewichtsverhältnis $Al_2O_3$ : MgO = 3 : 1) mehrfach gespült, jeweils zwischen den einzelnen Spülvorgängen 2 h bei 200° C im Heißluftstrom getrocknet und dann bei 600° C getempert. Der so beschichtete Träger (Wasseraufnahme 18,6 %) wird anschließend in eine Lösung von 60 g $Ba(NO_3)_2$ in 1000 ml dest. $H_2O$ getaucht. Nach Trocknung bei 200° C und 3-stündiger Temperung bei 600° C im Luftstrom enthält der fertige Katalysator 3,5 Gew.% Mg und 0,56 Gew.% Ba.
3.2 Katalysator für Zone 2
200 g γ-Aluminiumoxid-Kugeln (Fa. Rhone-Poulenc, "SCS 79", Durchmesser 2,4 - 4 mm, Schüttdichte 0,67 g/l, spezifische Oberfläche 80 m$^2$/g) werden in einer Imprägniertrommel mit 60 ml dest. $H_2O$ (entspricht 2/3 der Wasseraufnahmefähigkeit des Trägermaterials) vorbelegt und anschließend mit 30 ml einer Pd, Pt-haltigen Lösung imprägniert. Die Edelmetall-Lösung enthält 7,5 g 20 %ige $H_2PdCl_4$-Lösung (entspricht 1,5 g Pd) und 1,2 g 25 %ige $H_2PtCl_6$-Lösung (entspricht 0,3 g Pt) und ist mit 10 %iger $Na_2CO_3$-Lösung soweit vorneutralisiert, daß sich in der mit dest. $H_2O$ auf 30 ml verdünnten Lösung pH-Wert 6 einstellt.

Nach Trocknung und Reduktion gemäß Beispiel 1.2 enthält der fertige Katalysator 0,75 Gew.% Pd und 0,15 Gew.% Pt.
3.3 Katalysatortestung analog Beispiel 1.3
(Ergebnisse s. Tab. 1)

Beispiel 4

4.1 Katalysator für Zone 1 - analog Beispiel 3.1.
4.2 Katalysator für Zone 2
Die Herstellung des Katalysators erfolgte wie in Beispiel 2.2 beschrieben, jedoch wurde eine Imprägnierlösung folgender Zusammensetzung gewählt:
71,4 g $H_2PtCl_6$ (25 % Pt $\hat{=}$ 17,85 g Pt)

17,85 g $H_2PdCl_4$ (20 % Pd ≘ 3,57 g Pd)
in 1000 ml Lösung
Der fertige Katalysator war mit 0,3 Gew.% Edelmetall im Gewichtsverhältnis Pt : Pd = 5 : 1 belegt.
4.3 Katalysatortestung analog Beispiel 1.3
(Ergebnis s. Tab. 1)

Beispiel 5

5.1 Katalysator für Zone 1 - analog Beispiel 2.1.
5.2 Katalysator für Zone 2
200 g des in Beispiel 3.2 genannten Trägermaterials werden mit einer Lösung imprägniert, die 5 g einer 20 %igen $H_2PdCl_4$-Lösung enthält und mit 10 %iger NaOH soweit vorneutralisiert ist, daß sich in der mit dest. $H_2O$ auf 90 ml verdünnten Lösung pH-Wert 4 einstellt.

Nach Trocknung bei 120 °C und Reduktion mit Formiergas (95 Vol.% $N_2$, 5 Vol.% $H_2$) bei 250 ° C enthält der fertige Katalysator 0,5 Gew.% Pd.
5.3 Katalysatortestung analog Beispiel 1.3, jedoch bei 10 bar Absolutdruck und einmal, nach Erreichen der Anspringtemperatur, ohne Reaktorbeheizung. Die Exothermie der Umsetzung reicht aus, um, auch ohne zusätzliche Wärmezufuhr die Reaktion in Gang zu halten. (Ergebnisse s. Tab. 1)

Beispiel 6

6.1 Katalysator für Zone 1
Als Katalysator für Zone 1 wurden handelsübliche γ-Aluminiumoxid-Kugeln (Fa. Rhone-Poulenc, "SCS 250", Durchmesser 6 - 8 mm, Schüttdichte 0,69 g/cm$^3$, spezifische Oberfläche 253 m$^2$/g) verwendet.
6.2 Katalysator für Zone 2
50 kg γ-Aluminiumoxid-Kugeln (Fa. Rhone-Poulenc, "SCS 79", Durchmesser 2,4 - 4 mm, Schüttdichte 0,67 g/l, spezifische Oberfläche 80 m$^2$/g) werden zunächst in einer rotierenden Imprägniertrommel mit 15 l dest. $H_2O$ (entspricht 2/3 der Wasseraufnahmefähigkeit des Trägermaterials) vorbelegt und anschließend mit 7,5 l einer Pd, Pt-haltigen Lösung imprägniert. Die Edelmetall-Lösung enthält im einzelnen 375 g 20 %ige $H_2PdCl_4$-Lösung (entspricht 75 g Pd) und 300 g 25 %ige $H_2PtCl_6$-Lösung (entspricht 75 g Pt). Sie ist mit ca. 2,25 l 10 %iger $Na_2CO_3$-Lösung auf pH 6 vorneutralisiert und mit dest. $H_2O$ auf 7,5 l verdünnt.

Sobald die Edelmetall-Lösung vollständig vom Träger aufgenommen ist, wird der Katalysator bei 120 ° C bis zur Gewichtskonstanz getrocknet und anschließend 3 h bei 400 ° C unter Formiergas (95 Vol.% $N_2$, 5 Vol.% $H_2$) reduziert. Der fertige Katalysator enthält 0,15 Gew.% Pd und 0,15 Gew.% Pt.
6.3 Umsetzung eines Abgases aus einer großtechnischen Vinylchlorid-Produktion in einem Pilotreaktor
Die erste Zone des in der einzigen Abbildung dargestellten ringförmigen Doppelbettreaktors wird mit 60 l der unter 7.1 genannten Aluminiumoxid-Kugeln, die zweite Zone mit 70 l des, wie unter 7.2 beschrieben hergestellten Edelmetall-Katalysators gefüllt. Nach der Aufheizphase wird der Pilotreaktor mit Abgas aus einer großtechnischen VCM-Anlage bei unterschiedlichen Temperaturen und Belastungen betrieben.

Die Brennereinstellung bleibt während der gesamten Versuchsdauer unverändert:

| | |
|---|---|
| Methan: | 6 Nm$^3$/h |
| Brennluft: | 75 Nm$^3$/h |

Aus Werkstoffgründen werden die heißen Brennergase mit 320 Nm$^3$/h Sekundärluft etwas abgekühlt. Einige Versuchseinstellungen und Testergebnisse sind in Tab. 2 zusammengefaßt.

Beispiel 7

7.1 Katalysator für Zone 1 - analog Beispiel 6.1.
7.2 Katalysator für Zone 2
50 kg γ-Aluminiumoxid-Kugeln (Fa. Rhone-Poulenc, "SCS 250", Durchmesser 4 - 6 mm, Schüttdichte 0,71 g/l, spezifische Oberfäche 253 m$^2$/g) werden mit 15 l dest. $H_2O$ vorbelegt und anschließend mit 7,5 l einer Pt, Rh-haltigen Lösung imprägniert. Die Edelmetall-Lösung enthält 25 g 16 %ige $RhCl_3$-Lösung und 250 g 25 %ige $H_2PtCl_6$-Lösung, ist mit 500 ml 10 %iger $Na_2CO_3$-Lösung auf pH 6 vorneutralisiert und mit destilliertem Wasser auf 7,5 l verdünnt.

Nachdem die Edelmetall-Lösung vollständig vom Träger aufgenommen ist, wird der Katalysator bei 120° C bis zur Gewichtskonstanz getrocknet und anschließend 4 h bei 400° C unter Formiergas (95 Vol.% $N_2$, 5 Vol.% $H_2$) reduziert. Der fertige Katalysator enthält 0,125 Gew.% Pt und 0,008 Gew.% Rh.

7.3 Umsetzung eines Abgases aus einer großtechnischen Vinylchlorid-Produktion in einem Pilotreaktor

Die Testung der o.g. Katalysatoren erfolgt gemäß Beispiel 6 im ringförmigen Doppelbettreaktor bei unveränderter Brennereinstellung, jedoch unter Zudosieren von 240 $Nm^3/h$ Sekundärluft. Typische Versuchseinstellungen und Ergebnisse sind in Tab. 3 zusammengefaßt.

Tab. 1: Versuchsbedingungen und erreichte Restkonzentrationen von CO, Ethylen und Ethylchlorid im gereinigten Abgas (Laborversuche)

| | Temperatur (°C) vor Zone 1 | Restgehalte im gereinigten Abgas CO (ppm) | $C_2H_4$ (%) | $C_2H_5Cl$ (%) | Druck (bar) |
|---|---|---|---|---|---|
| Beispiel 1 | 300 | 7,1 | 0,6 | 7,6 | 1 |
| | 400 | 3,3 | < 0,1 | 1,1 | 1 |
| Beispiel 2 | 300 | 17,6 | 4,5 | 12,7 | 1 |
| | 600 | 2,7 | < 0,1 | < 0,1 | 1 |
| Beispiel 3 | 300 | 3,0 | < 0,1 | 8,8 | 1 |
| | 400 | 1,2 | < 0,1 | 0,2 | 1 |
| Beispiel 4 | 500 | 11,2 | 1,1 | 5,9 | 1 |
| | 600 | 7,4 | < 0,1 | 1,1 | 1 |
| Beispiel 5 | 300 | 6,7 | 0,2 | 6,8 | 10 |
| | 400 | 3,1 | < 0,1 | 0,6 | 10 |
| | ohne Reaktorbeheizung | 29,2 | 1,3 | 9,3 | 10 |

Tab.2: Versuchsbedingungen und Zusammensetzung von Schad- und Reingas (Beispiel 6)*) - Pilotanlage

| Versuchseinstellung | 1 | | 2 | | 3 | | 4 | |
|---|---|---|---|---|---|---|---|---|
| Abgasstrom ($Nm^3/h$) | 300 | | 300 | | 300 | | 650 | |
| Temperatur ($^oC$) | vor Zone 1 510 | nach Zone 2 650 | vor Zone 1 450 | nach Zone 2 600 | vor Zone 1 435 | nach Zone 2 575 | vor Zone 1 460 | nach Zone 2 675 |
| CO | 0,83 Vol.% | 7,2 ppm | 0,85 Vol.% | 9 ppm | 0,83 Vol.% | 12 ppm | 0,81 Vol.% | 37 ppm |
| $CH_4$ | 61 ppm | 2 ppm | 61 ppm | 23 ppm | 65 ppm | 30 ppm | 76 ppm | 3 ppm |
| $C_2H_4$ | 0,44 Vol.% | 5 ppm | 0,54 Vol.% | 16 ppm | 0,56 Vol.% | 10 ppm | 0,57 Vol.% | 5 ppm |
| $C_2H_6$ | 0,10 Vol.% | < 1 ppm | 0,06 Vol.% | 5 ppm | 0,09 Vol.% | 11 ppm | 0,08 Vol.% | < 1 ppm |
| $CH_3Cl$ | 5 ppm | < 1 ppm | 5 ppm | < 1 ppm | 3 ppm | < 1 ppm | 4 ppm | < 1 ppm |
| VCM | 21 ppm | < 1 ppm | 17 ppm | < 1 ppm | 17 ppm | < 1 ppm | 25 ppm | < 1 ppm |
| $C_2H_5Cl$ | 0,016 Vol.% | < 1 ppm | 0,014 Vo.% | < 1 ppm | 34 ppm | < 1 ppm | 0,013 Vol.% | < 1 ppm |
| 1,2-EDC | 2 ppm | < 1 ppm | 20 ppm | < 1 ppm | 1 ppm | < 1 ppm | 64 ppm | < 1 ppm |
| aromat. Kohlenwasserstoffe | 0,01 Vol.% | < 1 ppm | 85 ppm | < 1 ppm | 65 ppm | < 1 ppm | 96 ppm | < 1 ppm |

*) Die aufgeführten Ergebnisse wurden während eines Dauerversuches über mehrere Monate ermittelt. Beim direkten Vergleich von Meßergebnissen sind deshalb unterschiedliche Desaktivierungsstadien des Katalysators zu berücksichtigen.

Tab. 2: Versuchsbedingungen und Zusammensetzung von Schad- und Reingas (Beispiel 6)

| Versuchseinstellung | 5 | | 6 | | 7 | | 8 | |
|---|---|---|---|---|---|---|---|---|
| Abgasstrom ($Nm^3/h$) | 650 | | 650 | | 1000 | | 1000 | |
| Temperatur (°C) | vor Zone 1<br>448 | nach Zone 2<br>650 | vor Zone 1<br>430 | nach Zone 2<br>600 | vor Zone 1<br>410 | nach Zone 2<br>650 | vor Zone 1<br>355 | nach Zone 2<br>576 |
| CO | 0,84 Vol.% | 38 ppm | 0,90 Vol.% | 29 ppm | 0,83 Vol.% | 23 ppm | 0,88 Vol.% | 25 ppm |
| $CH_4$ | 65 ppm | 6 ppm | 64 ppm | 14 ppm | 53 ppm | 12 ppm | 58 ppm | 18 ppm |
| $C_2H_4$ | 0,44 Vol.% | 14 ppm | 0,48 Vol.% | 22 ppm | 0,47 Vol.% | 26 ppm | 0,54 Vol.% | 21 ppm |
| $C_2H_6$ | 0,06 Vol.% | < 1 ppm | 0,06 Vol.% | 3 ppm | 0,09 Vol.% | < 1 ppm | 0,06 Vol.% | 26 ppm |
| $CH_3Cl$ | 4 ppm | < 1 ppm | 3 ppm | < 1 ppm | 6 ppm | < 1 ppm | 3 ppm | < 1 ppm |
| VCM | 21 ppm | < 1 ppm | 21 ppm | < 1 ppm | 22 ppm | < 1 ppm | 22 ppm | < 1 ppm |
| $C_2H_5Cl$ | 0,01 Vol.% | < 1 ppm | 67 ppm | < 1 ppm | 0,018 Vol.% | < 1 ppm | 56 ppm | < 1 ppm |
| 1,2-EDC | 0,012 Vol.% | < 1 ppm | 0,017 Vol.% | < 1 ppm | 6 ppm | < 1 ppm | 11 ppm | < 1 ppm |
| aromat. Kohlenwasserstoffe | 99 ppm | < 1 ppm | 0,045 Vol.% | < 1 ppm | 0,014 Vol.% | < 1 ppm | 86 ppm | < 1 ppm |

Tab. 3: Versuchsbedingungen und Zusammensetzung von Schad- und Reingas (Beispiel 7)*) - Pilotanlage

| Versuchseinstellung | 1 | | 2 | | 3 | | 4 | |
|---|---|---|---|---|---|---|---|---|
| Abgasstrom ($Nm^3/h$) | 1100 | | 1100 | | 900 | | 900 | |
| | vor Zone 1 | nach Zone 2 | vor Zone 1 | nach Zone 2 | vor Zone 1 | nach Zone 2 | vor Zone 1 | nach Zone 2 |
| Temperatur (°C) | 490 | 730 | 440 | 670 | 500 | 710 | 425 | 650 |
| CO | 0,87 Vol.% | 34 ppm | 0,85 Vol.% | 52 ppm | 0,82 Vol.% | 25 ppm | 0,86 Vol.% | 55 ppm |
| $CH_4$ | 63 ppm | 3 ppm | 94 ppm | 39 ppm | 73 ppm | 7 ppm | 77 ppm | 29 ppm |
| $C_2H_4$ | 0,49 Vol.% | 2 ppm | 0,45 Vol.% | 43 ppm | 0,46 Vol.% | 8,5 ppm | 0,53 Vol.% | 39 ppm |
| $C_2H_6$ | 0,06 Vol.% | < 1 ppm | 0,06 Vol.% | 4,2 ppm | 0,05 Vol.% | < 1 ppm | 0,05 Vol.% | 38 ppm |
| $CH_3Cl$ | 2,8 ppm | < 1 ppm | 3,3 ppm | < 1 ppm | --- | --- | --- | --- |
| VCM | 27 ppm | < 1 ppm | 27 ppm | < 1 ppm | 24 ppm | < 1 ppm | 24 ppm | < 1 ppm |
| $C_2H_5Cl$ | 42 ppm | < 1 ppm | 43 ppm | < 1 ppm | 63 ppm | < 1 ppm | 74 ppm | < 1 ppm |
| 1,2-EDC | 4 ppm | < 1 ppm | 62 ppm | < 1 ppm | 13 ppm | < 1 ppm | 0,010 ppm | < 1 ppm |
| aromat. Kohlenwasserstoffe | 51 ppm | < 1 ppm | 63 ppm | < 1 ppm | 89 ppm | < 1 ppm | 87 ppm | < 1 ppm |

*) Die aufgeführten Ergebnisse wurden während eines Dauerversuches über mehrere Monate ermittelt. Beim direkten Vergleich von Meßergebnissen sind deshalb unterschiedliche Desaktivierungsstadien des Katalysators zu berücksichtigen.

**Tab. 3:** Versuchsbedingungen und Zusammensetzung von Schad- und Reingas (Beispiel 7)

| Versuchseinstellung | 5 | | 6 | |
|---|---|---|---|---|
| Abgasstrom ($Nm^3/h$) | 700 | | 700 | |
| | vor Zone 1 | nach Zone 2 | vor Zone 1 | nach Zone 2 |
| Temperatur (°C) | 490 | 670 | 565 | 735 |
| CO | 0,82 Vol.% | 23 ppm | 0,83 Vol.% | 15 ppm |
| $CH_4$ | 74 ppm | 14 ppm | 72 ppm | < 1 ppm |
| $C_2H_4$ | 0,49 Vol.% | 20 ppm | 0,38 Vol.% | < 1 ppm |
| $C_2H_6$ | 0,06 Vol.% | 1 ppm | 0,06 Vol.% | < 1 ppm |
| $CH_3Cl$ | --- | --- | --- | --- |
| VCM | 57 ppm | < 1 ppm | 23 ppm | < 1 ppm |
| $C_2H_4Cl$ | 22 ppm | < 1 ppm | 66 ppm | < 1 ppm |
| 1,2-EDC | < 1 ppm | < 1 ppm | 1 ppm | < 1 ppm |
| aromat. Kohlenwasserstoffe | 78 ppm | < 1 ppm | 73 ppm | < 1 ppm |

## Patentansprüche

1. Verfahren zur katalytischen Umsetzung von Kohlenwasserstoff, Halogenkohlenwasserstoff und Kohlenmonoxid enthaltenden Abgasen, insbesondere aus der Synthese von Vinylchlorid, wobei die Abgase bei 300 - 800, vorzugsweise 350 - 730° C, zunächst durch eine einen Katalysator zur oxidativen Spaltung enthaltende erste Zone und dann durch eine einen Platingruppenmetallkatalysator zur oxidativen Nachverbrennung enthaltende zweite Zone geleitet werden,
**dadurch gekennzeichnet,**
daß die katalytisch aktive Substanz des Katalysators der ersten Zone Aluminiumoxid, Siliciumdioxid, Aluminiumsilikat und/oder ein Zeolith, mit einem Gehalt von 0 - 20 Gew.-% einer oder mehrerer oxidischer Verbindungen aus der Gruppe der Elemente Ba. Mg und Mn und die katalytisch aktive Substanz des Katalysators der zweiten Zone Platin und/oder Palladium oder Platin und Rhodium ist.

2. Verfahren nach Anspruch 1,
**dadurch gekennzeichnet,**
daß Platin und Palladium im Gewichtsverhältnis 1 : 5 - 5 : 1 und Platin und Rhodium im Gewichtsverhältnis 5 : 1 - 20 : 1 vorliegen.

3. Verfahren nach den Ansprüchen 1 bis 2,
**dadurch gekennzeichnet,**
daß der Katalysator der ersten und/oder zweiten Zone als ungeformtes oder geformtes Schüttgut aus dem Katalysatormaterial oder in Form von mit der katalytisch aktiven Komponente versehenen Tragerkörpern oder als mit einem katalysefördernden Trägermaterial für die katalytisch aktive Komponente überzogener Monolith oder als mit der katalytisch aktiven Komponente versehener Monolith oder als Monolith aus katalysefördernden Material oder als Monolith aus dem Katalysatormaterial selbst, ausgebildet ist.

4. Verfahren nach den Ansprüchen 1 bis 3,
**dadurch gekennzeichnet,**
daß die beiden Katalysatoren als Doppelbett oder im Abstand voneinander angeordnet sind.

5. Verfahren nach den Ansprüchen 1 bis 4,
**dadurch gekennzeichnet,**
daß das Abgas durch eine ringförmige Anordnung der beiden Katalysatorzonen geführt wird.

6. Verfahren nach Anspruch 5,
**dadurch gekennzeichnet,**
daß die ringförmige Anordnung zylindrisch ist.

7. Verfahren nach Anspruch 6,
**dadurch gekennzeichnet,**
daß das Abgas durch die zylindrische Anordnung von außen nach innen oder umgekehrt, geführt wird.

8. Verfahren nach den Ansprüchen 1 bis 7,
**dadurch gekennzeichnet,**
daß die Katalysatorzonen als Schüttbett und/oder Monolithanordnung ausgebildet sind.

9. Verfahren nach Anspruch 8,
**dadurch gekennzeichnet,**
daß die Monolithkatalysatoren oder eine Kombination dieser mit Schüttbetten in Form eines Vielecks angeordnet sind.

10. Verfahren nach den Ansprüchen 1 bis 9,
**dadurch gekennzeichnet,**
daß das zu reinigende Abgas in einem vom gereinigten Abgas beheizten Wärmeaustauscher vorerhitzt wird.

11. Verfahren nach den Ansprüchen 1 bis 10,
**dadurch gekennzeichnet,**
daß das zu reinigende Abgas vorübergehend durch Fremdheizung auf die Anspringtemperatur der Katalysatoren erhitzt wird.

12. Verfahren nach den Ansprüchen 1 bis 11,
**dadurch gekennzeichnet,**
daß man die Umsetzung bei Normaldruck bis 10 bar Überdruck durchführt.

13. Apparatur zur Durchführung des Verfahrens nach einem oder mehreren der vorstehenden Ansprüche,
**gekennzeichnet durch**
ein zylindrisches Reaktorgehäuse (1) mit einer von einem ringförmigen Boden (2) begrenzten kreisförmigen Öffnung (3), eine auf dem ringförmigen Boden gasdicht aufsitzende, oben durch eine Platte (4) geschlossene Anordnung dreier in Abständen entsprechend der Dicke zweier aufzunehmender ringförmiger Monolithkatalysator- und/oder Schüttgutkatalysatorschichten (5), (6) ineinander gestellter und auf dem ringförmigen Boden aufsitzender Zylinder (7), (8), (9) mit perforierten Mänteln, von denen der innere erste Mantel (7) mit der Kante (10) der Bodenöffnung (3) fluchtet, der zweite Mantel (8) die beiden Katalysatorschichten trennt und der äußere Mantel (9) in einem einen Ringraum (11) zur Reaktorgehäusewand ausbildenden gleichmäßigen oder sich nach oben vergrößernden Abstand steht, eine unter dem Boden des Reaktorgehäuses sich anschließende und mit der Sekundärseite eines Wärmeaustauschers (12) in Verbindung stehende Misch- und Vorheizzone (13), in welche seitlich eine Leitung (14) für die Zufuhr eines gasförmigen Heizmediums mündet, eine mit dem Kopfraum (15) des Reaktorgehäuses verbundene Abgasleitung (16), welche zu einer Abzweigung (17) führt, von der eine Zweigleitung (18) mit dem Eintrittsstutzen des Wärmeaustauschers für das Heizmedium und eine andere über ein Schließorgan (19) mit dem Abgasaustritt (20) der Apparatur verbunden ist, der Austrittsstutzen des Wärmeaustauschers für das Heizmedium über eine Leitung (21) direkt mit dem Abgasaustritt (20) verbunden ist und die Primärseite des Wärmeaustauschers an die Zufuhrleitung (22) für das umzusetzende Abgas angeschlossen ist.

**14.** Apparatur zur Durchführung des Verfahrens nach einem oder mehreren der Ansprüche 1 bis 12, **gekennzeichnet durch**
ein zylindrisches Reaktorgehäuse (1) mit einer von einem ringförmigen Boden (2) begrenzten kreisförmigen Öffnung (3), eine auf dem ringförmigen Boden gasdicht aufsitzende, oben durch eine Platte (4) geschlossene Anordnung dreier in Abständen entsprechend der Dicke zweier aufzunehmender ringförmiger Monolithkatalysator- und/oder Schüttgutkatalysatorschichten (5), (6) ineinander gestellter und auf dem ringförmigen Boden aufsitzender Zylinder (7), (8), (9) mit perforierten Mänteln, von denen der innere erste Mantel (7) mit der Kante (10) der Bodenöffnung (3) fluchtet, der zweite Mantel (8) die beiden Katalysatorschichten trennt und der äußere Mantel (9) in einem einen Ringraum (11) zur Reaktorgehäusewand ausbildenden gleichmäßigen oder sich nach oben vergrößernden Abstand steht, eine unter dem Boden des Reaktorgehäuses sich anschließende und mit der Sekundärseite eines Wärmeaustauschers (12) in Verbindung stehende Misch- und Vorheizzone (13), einen über dem oberen Ende des Reaktorgehäuses sich anschließenden Kopfraum (15), In den seitlich eine Leitung (14) für die Zufuhr eines gasförmigen Heizmediums mündet, eine mit dem Kopfraum (15) des Reaktorgehäuses verbundene Abgasleitung (16), welche zu einer Abzweigung (17) führt, von der eine Zweigleitung (18) mit dem Eintrittsstutzen des Wärmeaustauschers für das Heizmedium und eine andere über ein Schließorgan (19) mit dem Abgasaustritt (20) der Apparatur verbunden ist, der Austrittsstutzen des Wärmeaustauschers für das Heizmedium über eine Leitung (21) direkt mit dem Abgasaustritt (20) verbunden ist und die Primärseite des Wärmeaustauschers an die Zufuhrleitung (22) für das umzusetzende Abgas angeschlossen ist.

**15.** Apparatur nach Anspruch 13 oder 14, **dadurch gekennzeichnet,**
daß die beiden Katalysatorschichten aus aufeinandergesetzten Monolithkatalysatoren und/oder Schüttgut-Katalysatoren bestehen und die zylindrische Halterungsanordnung von Anspruch 13 oder 14 unter Ersatz der Zylinder (7), (8), (9) durch eine mehreckige Anordnung an sich bekannter Halterungseinrichtungen für Monolithen oder Schüttbetten ersetzt ist.

## Claims

**1.** Process for the catalytic conversion of offgases containing hydrocarbons, halogenated hydrocarbons and carbon monoxide, in particular from the synthesis of vinyl chloride, the offgases initially being passed at 300 - 800, preferably 350 - 730 ° C, through a first zone containing a catalyst for oxidative cleavage and then through a second zone containing a metal catalyst from the platinum group for oxidative afterburning, characterised in that the catalytically active substance of the catalyst in the first zone is aluminium oxide, silicon dioxide, aluminium silicate and/or a zeolite, containing 0 - 20% by weight of one or more oxidic compounds from the group of elements Ba, Mg and Mn and the catalytically active substance of the catalyst in the second zone is platinum and/or palladium or platinum and rhodium.

**2.** Process according to Claim 1, characterised in that platinum and palladium are present in the weight ratio 1 : 5 - 5 : 1 and platinum and rhodium are present in the weight ratio 5 : 1 - 20 : 1.

3. Process according to Claims 1 or 2, characterised in that the catalyst in the first and/or second zone is designed as an unshaped or shaped loose bed of the catalyst material or in the form of support elements provided with the catalytically active component or as a monolith coated with a catalysis-promoting support material for the catalytically active component or as a monolith provided with the catalytically active component or as a monolith comprising catalysis-promoting material or as a monolith comprising the catalyst material itself.

4. Process according to Claims 1 to 3, characterised in that the two catalysts are arranged as a double bed or at a distance from one another.

5. Process according to Claims 1 to 4, characterised in that the offgas is passed through an annular arrangement of the two catalyst zones.

6. Process acccording to Claim 5, characterised in that the annular arrangement is cylindrical.

7. Process according to Claim 6, characterised in that the offgas is passed through the cylindrical arrangement from the outside inwards or vice versa.

8. Process according to Claims 1 to 7, characterised in that the catalyst zones are designed as a bed of loose material and/or a monolith arrangement.

9. Process according to Claim 8, characterised in that the monolith catalysts or a combination thereof with beds of loose material are arranged in the form of a polygon.

10. Process according to Claims 1 to 9, characterised in that the offgas to be cleaned is pre-heated in a heat exchanger heated by the cleaned offgas.

11. Process according to Claims 1 to 10, characterised in that the offgas to be cleaned is heated to the start-up temperature of the catalysts by means of external heating.

12. Process according to Claims 1 to 11, characterised in that the conversion is carried out at atmospheric pressure to an overpressure of 10 bar.

13. Apparatus for carrying out the process according to one or more of the previous claims, characterised by a cylindrical reactor housing (1) having a circular opening (3) delimited by an annular base (2), an arrangement, located on the annular base so as to be gas-tight and sealed at the top by a plate (4), of three cylinders (7), (8) and (9) located on the annular base and placed one inside the other at separations corresponding to the thickness of two annular layers (5) and (6) of monolithic or loose material catalyst to be accommodated, the cylinders having perforated casings of which the first, inner casing (7) is flush with the edge (10) of the base opening (3), the second casing (8) separates the two catalyst layers and the outer casing (9) is at a uniform distance or at an upward-increasing distance, forming an annular space (11) to the reactor housing wall, a mixing and pre-heating zone (13) which follows under the base of the reactor housing, is connected to the secondary side of a heat exchanger (12) and into which a line (14) for supply of a gaseous heating medium runs laterally, an offgas line (16) which is connected to the head space (15) of the reactor housing and which leads to a junction (17) from which a branch line (18) is connected to the inlet connector of the heat exchanger for the heating medium and another branch line is connected to the offgas outlet (20) of the apparatus via a valve (19), the outlet connector of the heat exchanger for the heating medium is connected directly to the offgas outlet (20) via a line (21), and the primary side of the heat exchanger is connected to the supply line (22) for the offgas to be converted.

14. Apparatus for carrying out the process according to one or more of Claims 1 to 12, characterised by a cylindrical reactor housing (1) having a circular opening (3) delimited by an annular base (2), an arrangement, located on the annular base so as to be gas-tight and sealed at the top by a plate (4), of three cylinders (7), (8) and (9) located on the annular base and placed one inside the other at separations corresponding to the thickness of two annular layers (5) and (6) of monolithic or loose material catalyst to be accommodated, the cylinders having perforated casings of which the first, inner casing (7) is flush with the edge (10) of the base opening (3), the second casing (8) separates the two

catalyst layers and the outer casing (9) is at a uniform distance or at an upward-increasing distance, forming an annular space (11) to the reactor housing wall, a mixing and pre-heating zone (13) which follows under the base of the reactor housing, is connected to the secondary side of a heat exchanger (12), a head space (15) which follows above the upper end of the reactor housing into which a line (14) for supply of a gaseous heating medium runs laterally, an offgas line (16) which is connected to the head space (15) of the reactor housing and which leads to a junction (17) from which a branch line (18) is connected to the inlet connector of the heat exchanger for the heating medium and another branch line is connected to the offgas outlet (20) of the apparatus via a valve (19), the outlet connector of the heat exchanger for the heating medium is connected directly to the offgas outlet (20) via a line (21), and the primary side of the heat exchanger is connected to the supply line (22) for the offgas to be converted.

**15.** Apparatus according to Claim 13 or 14, characterised in that the two catalyst layers comprise monolith catalysts and/or loose material catalysts placed one on top of the other and the cylindrical retention arrangement of Claim 13 or 14 is replaced, through replacement of the cylinders (7), (8) and (9), by a polygonal arrangement of retention devices which are known per se for monoliths or beds of loose material.

**Revendications**

**1.** Procédé de conversion catalytique de gaz d'échappement contenant des hydrocarbures, des hydrocarbures halogénés et du monoxyde de carbone, provenant notamment de la synthèse du chlorure de vinyle, dans lequel les gaz d'échappement à 300-800, de préférence 350-730 ° C sont d'abord conduit dans une première zone contenant un catalyseur pour le craquage oxydant et ensuite dans une deuxième zone comprenant un catalyseur métallique du groupe platine pour la post combustion oxydante, procédé caractérisé en ce que la substance catalytiquement active du catalyseur de la première zone est l'oxyde d'aluminium, le dioxyde de silicium, le silicate d'aluminium et/ou une zéolite, avec une teneur de 0 à 20 % en poids d'un ou de plusieurs composés oxydés du groupe des éléments Ba, Mg et Mn et la substance catalytiquement active du catalyseur de la deuxième zone est le platine et/ou le palladium ou le platine et le rhodium.

**2.** Procédé selon la revendication 1, caractérisé en ce que le platine et le palladium se trouvent dans le rapport pondéral 1 : 5 - 5 : 1 et le platine et le rhodium dans le rapport pondéral 5 : 1 - 20 : 1.

**3.** Procédé selon les revendications 1 à 2, caractérisé en ce que le catalyseur de la première et/ou de la deuxième zone se trouve sous forme de matière en vrac non moulée ou moulée en matériau catalyseur ou sous forme de corps support munis de composants catalytiques actifs, ou de monolithe revêtu de matériau support favorisant la catalyse pour les composants catalytiquement actifs, ou de monolithes munis de composants catalytiquement actifs ou de monolithes en matériau favorisant la catalyse ou de monolithes en matériau catalyseur lui-même.

**4.** Procédé selon l'une des revendications 1 à 3, caractérisé en ce que les deux catalyseurs sont disposés en lit double ou à une certaine distance l'un de l'autre.

**5.** Procédé selon les revendication 1 à 4, caractérisé en ce que le gaz d'échappement est amené dans un arrangement annulaire des deux zones de catalyseurs.

**6.** Procédé selon la revendication 5, caractérisé en ce que l'arrangement annulaire est cylindrique.

**7.** Procédé selon la revendication 6, caractérisé en ce que le gaz d'échappement est dirigé dans l'arrangement cylindrique de l'extérieur vers l'intérieur ou vice versa.

**8.** Procédé selon les revendications 1 à 7, caractérisé en ce que les zones de catalyseur sont constituées sous forme de lit en vrac et/ou d'arrangement monolithique.

**9.** Procédé selon la revendication 8, caractérisé en ce que les catalyseurs monolithiques ou une combinaison de ceux-ci avec des lits en vrac sont disposés sous la forme d'un polygone.

**10.** Procédé selon les revendications 1 à 9, caractérisé en ce que le gaz d'échappement à purifier est préchauffé dans un échangeur de chaleur chauffé par le gaz d'échappement épuré.

**11.** Procédé selon les revendications 1 à 10, caractérisé en ce que le gaz d'échappement à purifier est chauffé transitoirement par un chauffage d'appoint et porté à la température de démarrage des catalyseurs.

**12.** Procédé selon les revendications 1 à 11, caractérisé en ce qu'on réalise la conversion entre la pression normale et une surpression de 10 bars.

**13.** Appareil pour la mise en oeuvre du procédé selon une ou plusieurs des revendications précédentes, caractérisé par un boîtier de réacteur cylindrique (1) avec une ouverture (3) circulaire délimitée par un fond annulaire (2), un arrangement reposant de manière étanche aux gaz sur le fond annulaire, fermé en haut par une plaque (4), composé de trois cylindres (7), (8), (9) à enveloppes perforées, reposant sur le fond annulaire, disposés l'un dans l'autre à des distances correspondant à l'épaisseur de deux couches (5) et (6) annulaires de catalyseurs monolithiques et/ou de matière en vrac à loger, dont la première enveloppe intérieure (7) est alignée sur le bord (10) de l'ouverture du fond (3), la deuxième enveloppe (8) sépare les deux couches de catalyseur et l'enveloppe extérieure (9) se trouve à une distance délimitant un espace annulaire (11) avec la paroi du boîtier du réacteur, régulier ou s'élargissant vert le haut, une zone de préchauffage et de mélange (13) se raccordant aux fond du boîtier du réacteur et se trouvant en liaison avec la face secondaire d'un échangeur thermique (12), zone dans laquelle débouche latéralement une conduite (14) pour l'amener d'un milieu de chauffage gazeux, une conduite de gaz d'échappement (16) raccordée en tête du réacteur (15), qui conduit à une dérivation (17), dont une branche (18) est reliée à l'ajutage d'entrée de l'échangeur thermique pour le milieu de chauffage et une autre est reliée par l'intermédiaire d'un clapet de fermeture (19) à la sortie de gaz d'échappement (20) de l'appareil, l'ajutage de sortie de l'échangeur thermique pour le moyen de chauffage est relié directement à la sortie de gaz d'échappement par une conduite (21) et la face primaire de l'échangeur thermique est branchée à la conduite d'amenée (22) des gaz d'échappement à traiter.

**14.** Appareil pour la mise en oeuvre du procédé selon une ou plusieurs des revendications 1 à 12, caractérisé par un boîtier de réacteur cylindrique (1) avec une ouverture (3) circulaire délimitée par un fond annulaire (2), un arrangement reposant de manière étanche aux gaz sur le fond annulaire, fermé en haut par une plaque (4), composé de trois cylindres (7), (8), (9) à enveloppes perforées, reposant sur le fond annulaire, disposés l'un dans l'autre à des distances correspondant à l'épaisseur de deux couches (5) et (6) annulaires de catalyseurs monolithiques et/ou de matière en vrac à loger, dont la première enveloppe intérieure (7) est alignée sur le bord (10) de l'ouverture du fond (3), la deuxième enveloppe (8) sépare les deux couches de catalyseur et l'enveloppe extérieure (9) se trouve à une distance délimitant un espace annulaire (11) avec la paroi du boîtier du réacteur, régulier ou s élargissant vert le haut, une zone de préchauffage et de mélange (13) se raccordant aux fond du boîtier du réacteur et se trouvant en liaison avec la face secondaire d'un échangeur thermique (12), une tête de réacteur (15) se raccordant à l'extrémité supérieure du boîtier de réacteur, tête dans laquelle latéralement débouche une conduite 14 pour l'amener d'un milieu de chauffage gazeux, une conduite de gaz d'échappement (16) raccordée en tête du réacteur (15), qui conduit à une dérivation (17), dont une branche (18) est reliée à l'ajutage d'entrée de l'échangeur thermique pour le milieu de chauffage et une autre est reliée par l'intermédiaire d'un clapet de fermeture (19) à la sortie de gaz d'échappement (20) de l'appareil, l'ajutage de sortie de l'échangeur thermique pour le moyen de chauffage est relié directement à la sortie de gaz d'échappement par une conduite (21) et la face primaire de l'échangeur thermique est branchée à la conduite d'amenée (22) des gaz d'échappement à traiter.

**15.** Appareil selon la revendication 13 ou la revendication 14, caractérisé en ce que les deux couches de catalyseur sont constituées de catalyseurs monolithiques empilés et/ou de catalyseurs en matière en vrac et que l'arrangement cylindrique de maintien de la revendication 13 ou de la revendication 14 est remplacé par un arrangement polygonal de dispositifs connus de maintien pour monolithes ou lits de matière en vrac.

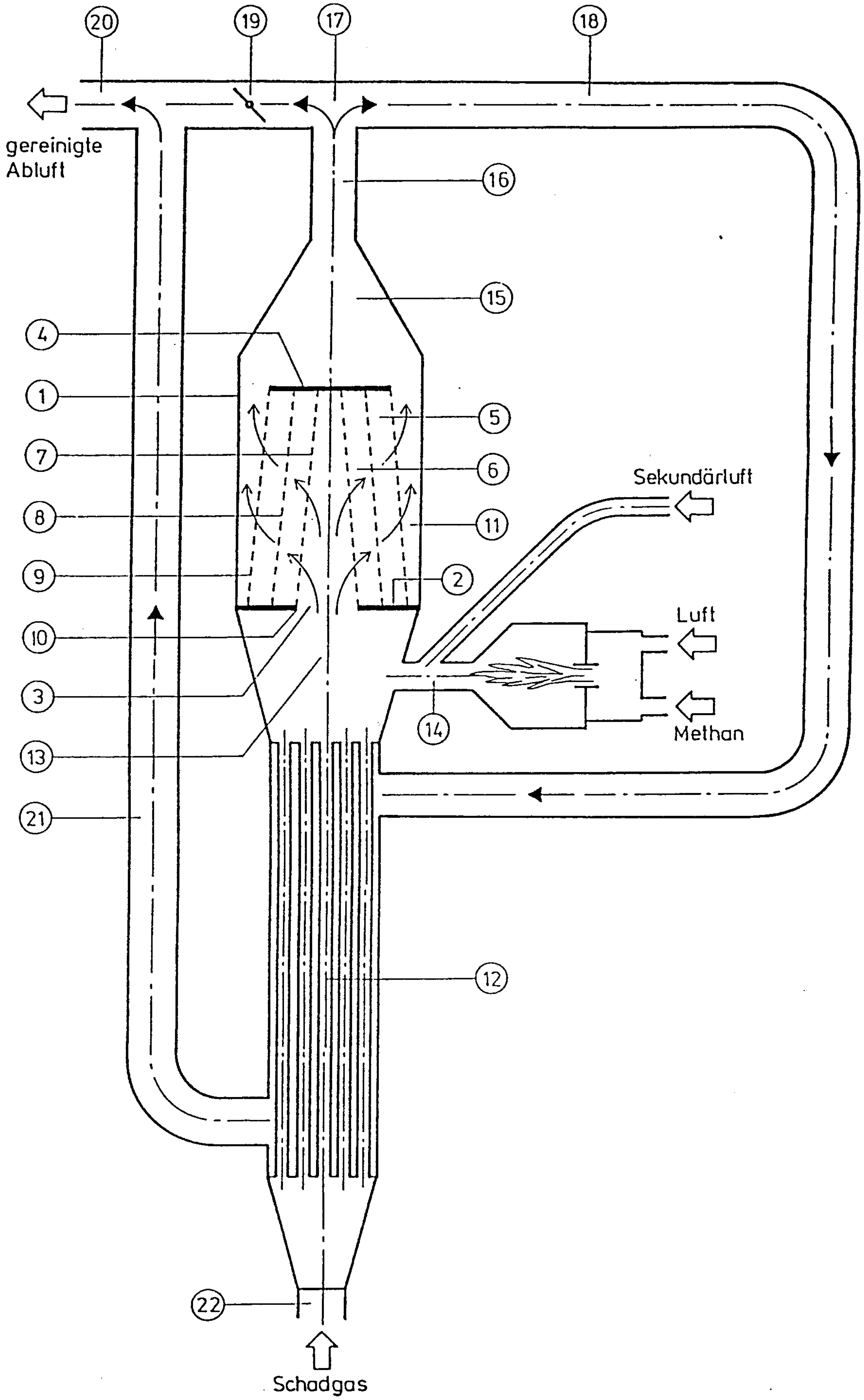
20
19
17
18
gereinigte Abluft
16
15
4
1
5
7
6
8
11
9
2
10
3
13
21
14
Sekundärluft
Luft
Methan
12
22
Schadgas